(19) Europäisches Patentamt
European Patent Office
Office européen des brevets

(11) EP 2 936 080 B1

(12) EUROPÄISCHE PATENTSCHRIFT

(45) Veröffentlichungstag und Bekanntmachung des Hinweises auf die Patenterteilung:
01.04.2020 Patentblatt 2020/14

(21) Anmeldenummer: 13795252.9

(22) Anmeldetag: 25.11.2013

(51) Int Cl.:
$G01F\ 1/66\ ^{(2006.01)}$

(86) Internationale Anmeldenummer:
PCT/EP2013/074586

(87) Internationale Veröffentlichungsnummer:
WO 2014/095238 (26.06.2014 Gazette 2014/26)

(54) VERFAHREN ZUR VERIFIZIERUNG DER ZUVERLÄSSIGKEIT VON ERMITTELTEN MESSDATEN EINER ULTRASCHALL-DURCHFLUSSMESSUNG NACH DER LAUFZEITDIFFERENZ-METHODE UND ZUGEHÖRIGES ULTRASCHALLDURCHFLUSSMESSGERÄT

PROCESS TO VERIFY THE RELIABILITY OF MEASUREMENT OF AN ULTRASONIC FLOWMETER OPERATING ALONG THE PRINCIPLE OF TRANSIT TIME DIFFERENCE AND RELATED FLOWMETER.

PROCÉDÉ DE VÉRIFICATION DE LA FIABILITÉ DE LA MESURE D'UN DÉBITMÉTRE À ULTRASONS OPÉRANT SELON LE PRINCIPE DE LA DIFFÉRENCE DE TEMPS DE TRANSIT ET DÉBITMÉTRE ASSOCIÉ.

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 18.12.2012 DE 102012112516

(43) Veröffentlichungstag der Anmeldung:
28.10.2015 Patentblatt 2015/44

(73) Patentinhaber: Endress+Hauser Flowtec AG
4153 Reinach (BL) (CH)

(72) Erfinder:
• WANDELER, Frank
5236 Remingen (CH)
• FLEURY, Aurèle
4147 Aesch (CH)

(74) Vertreter: Andres, Angelika Maria
Endress+Hauser (Deutschland) AG+Co. KG
PatServe
Colmarer Strasse 6
79576 Weil am Rhein (DE)

(56) Entgegenhaltungen:
US-A1- 2004 050 176     US-A1- 2005 055 171
US-A1- 2005 209 795     US-A1- 2006 243 065

EP 2 936 080 B1

**Beschreibung**

Die vorliegende Erfindung betrifft ein Verfahren zur Verifizierung der Zuverlässigkeit von ermittelten Messdaten einer Ultraschall-Durchflussmessung nach der Laufzeitdifferenz-Methode nach dem Anspruch 1 und ein Ultraschalldurchflussmessgerät nach Anspruch 6.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Nach neusten Untersuchungen treten bei der Ultraschalldurchflussmessung Ultraschallstreusignale auf, welche nicht ausschließlich über die Rohrwandung eines Messrohres eines Ultraschalldurchflussmessgerätes übertragen werden, und welche streckenweise durch das Messmedium propagieren. Diese Klasse von Störsignalen weist eine hohe Schwankungsbreite bezüglich des Messfehlers bei bereits geringen Temperaturänderungen auf und folglich sind diese Störsignale daher nur schwer zu kompensieren. Die US 2005/055171 A1 offenbart ein Verfahren gemäß dem Oberbegriff des Anspruchs 1.

Ausgehend von dieser grundlegenden Erkenntnis besteht nunmehr die Aufgabe der vorliegenden Erfindung darin, die Zuverlässigkeit der ermittelten Messdaten einer Ultraschallmessung in Hinblick auf das Auftreten und den Umfang der vorgenannten temperatursensiblen Störsignale zu verifizieren.

Die vorliegende Erfindung löst diese Aufgabe durch die Bereitstellung eines Verfahrens mit den Merkmalen des Anspruchs 1 und ein Ultraschalldurchflussmessgerät mit den Merkmalen des Anspruchs 6.

Erfindungsgemäß umfasst ein Verfahren zur Verifizierung der Zuverlässigkeit von ermittelten Messdaten einer Ultraschall-Durchflussmessung nach der Laufzeitdifferenz-Methode, wobei durch ein Ultraschalldurchflussmessgerät mit zumindest zwei Ultraschallwandlern Ultraschallsignale schräg in oder entgegen einer Strömungsrichtung eines Messmediums ausgesandt und empfangen werden,

das Aufnehmen eines ersten Ultraschallstörsignals innerhalb eines ersten Zeitfensters vor dem Empfang eines ersten Ultraschallnutzsignals, welches im Wesentlichen durch das Messmedium zwischen den Wandlern propagiert, wobei das erste Ultraschallstörsignal zumindest streckenweise durch das Messmedium zwischen den Wandlern propagiert;

das Aufnehmen eines zweiten Ultraschallstörsignals innerhalb eines zweiten Zeitfensters vor dem Empfang eines zweiten Ultraschallnutzsignals, welches im Wesentlichen durch das Messmedium zwischen den Wandlern propagiert, wobei das erste und das zweite Ultraschallnutzsignal jeweils zwei Ultraschallsignalen zugeordnet sind, die in entgegengesetzten Richtungen durch das Medium gesandt werden, und

das Ermitteln eines Gütekriteriums zur Bewertung der Messunsicherheit eines Messwertes, welcher proportional zu der aus dem ersten und zweiten Ultraschallnutzsignal ermittelten Laufzeitdifferenz ist. Das Ermitteln des Gütekriteriums umfasst eine Differenzbildung zwischen dem ersten und dem zweiten Störsignal.

Durch die Ermittlung des Gütekriteriums als Term für den Umfang der asymmetrischen Rohrwellen gelingt eine Verifizierung der Ultraschallmessung insgesamt und der ermittelten Einzelmessdaten.

Eine Verifizierung kann entweder durch Evaluierung des Gütekriteriums durch den Endnutzer erfolgen oder durch eine Auswerteeinheit beispielsweise durch akustische oder optische Ausgabe vorgenommen werden.

Vorteilhafte Ausgestaltungen der Erfindung sind Gegenstand der Unteransprüche.

Zusätzlich kann die Auswerteeinheit nach der Verifizierung des Gütekriteriums anhand von vorgegebenen Sollwerten vorteilhaft entscheiden, ob ein ermittelter Einzelmesswert hinreichend zuverlässig ist. Die Zuverlässigkeit/Unzuverlässigkeit des Einzelmesswertes kann beispielsweise durch visuell-unterschiedliche Anzeige erfolgen. So können unzuverlässige Einzelmesswerte beispielsweise rot und zuverlässige Einzelmesswerte schwarz oder grün angezeigt werden.

Es ist von Vorteil, wenn das Gütekriterium durch eine Vergleichsoperation ermittelt wird, welche die Ermittlung der mittleren quadratischen Differenz aus dem ersten und dem zweiten Ultraschallstörsignals umfasst, da dadurch eine bessere Fehlerabschätzung erfolgen kann.

Idealerweise sind das erste und das zweite Zeitfenster gleich groß, so dass kein zusätzlicher Mess- und Energieaufwand für ein längeres Zeitfenster aufgewandt wird, welches nicht verglichen werden kann.

Erfindungsgemäß umfasst ein Ultraschalldurchflussmessgerät zumindest zwei Ultraschallwandler und eine Auswertevorrichtung, welche ausgebildet ist zur Verifizierung der Zuverlässigkeit von ermittelten Messdaten einer Ultraschall-Durchflussmessung nach der Laufzeitdifferenz-Methode, nach einem Verfahren gemäß Anspruch 1.

Vorteilhafte Ausgestaltungen der Erfindung sind Gegenstand der Unteransprüche.

Es ist von Vorteil, wenn das Ultraschalldurchflussmessgerät eine Anzeigeeinheit aufweist, zur Ausgabe einer aktuell ermittelten Messunsicherheit.

Ein nicht erfindungsgemäßes Verfahren zur Bestimmung einer Strömungsgeschwindigkeit oder eines Durchflusses eines Messmediums durch ein Ultraschalldurchflussmessgerät mit zumindest zwei Ultraschallwandlern, wobei Ultraschallsignale schräg in oder entgegen einer Strömungsrichtung eines Messmediums ausgesandt und empfangen werden, wobei eine Kompensation eines Messfehlers hervorgerufen durch Ultraschallstörsignale, welche im Wesentlich außerhalb des Messmediums zwischen den Ultraschallwandlern propagieren umfasst die folgenden Schritte:

a) Aussenden einer Folge von Ultraschallsendesignalen entlang eines Messpfades mit einer modulierten Impulsfolgeperiode

b) Empfangen einer Folge von Ultraschallempfangssignalen, umfassend Ultraschallnutzsignale, wobei jeweils ein Ultraschallnutzsignal von zumindest einem Ultraschallstörsignal überlagert ist, und

c) Mitteln der Ultraschallempfangssignale einer Folge oder eines davon abgeleiteten Wertes zur Reduzierung eines durch die Ultraschallstörsignale hervorgerufenen Messwertfehlers.

Die Ultraschallsendesignale können nacheinander in einer Richtung ausgesandt werden. Alternativ kann sich die Senderichtung der Ultraschallpulse beliebig ändern, wobei allerdings sicherzustellen ist, dass das gleiche Modulationsmuster für beide Senderichtungen verwendet wird.

Die Reduktion des Messwertfehlers erfolgt insbesondere bei den Ultraschallstörsignalen, welche von vorhergehenden Sendepulsen stammen.

Fig. 1    Darstellung eines Empfangssignals mit einem Ultraschallnutzsignal und einem Ultraschallstörsignal ;

Fig. 2    Darstellung von zwei asymmetrischen Ultraschallstörsignalen;

Fig. 3    Darstellung von zwei überlagerten symmetrischen Ultraschallstörsignalen;

Fig. 4    Änderung des Messfehlers von asymmetrischen Ultraschallstörsignalen bei Temperaturänderung des Mediums;

Fig. 5    Änderung des Messfehlers von symmetrischen Ultraschallstörsignalen bei Temperaturänderungen des Mediums;

Fig. 6    Überlagerung zweier Ultraschallsignale umfassend ein Ultraschallnutzsignalbereich und einen vorgelagerten Störsignalbereich;

Fig. 7    Reduktion der Temperaturabhängigkeit von asymmetrischen Ultraschallstörsignalen durch Impulsfolgemodulation; und

Fig. 8    Schematische Darstellung eines Ultraschalldurchflussmessgerätes nach dem Stand der Technik.

Nachfolgend soll die Erfindung und deren zugrundeliegende spezielle Problemstellung anhand eines Ausführungsbeispiels für eine Ultraschallwandleranordnung mit einem Ultraschallwandlerpaar näher erläutert werden. Es sind auch Ultraschallwandleranordnungen mit mehr als zwei Ultraschallwandler bekannt, auf welche die vorliegende Erfindung ebenfalls anwendbar ist.

Bei der Ultraschall-Durchflussmessung nach dem Laufzeitprinzip werden Ultraschall-Impulse in einem bestimmten Winkel zur Flussrichtung durch das zu messende Medium gesendet. Dies erfolgt beispielsweise durch zwei aufeinander ausgerichtete Ultraschallwandler, wobei jeder Ultraschallwandler über einem ersten Betriebsmodus als Ultraschallsender oder in einem zweiten Betriebsmodus als Ultraschallempfänger fungieren kann.

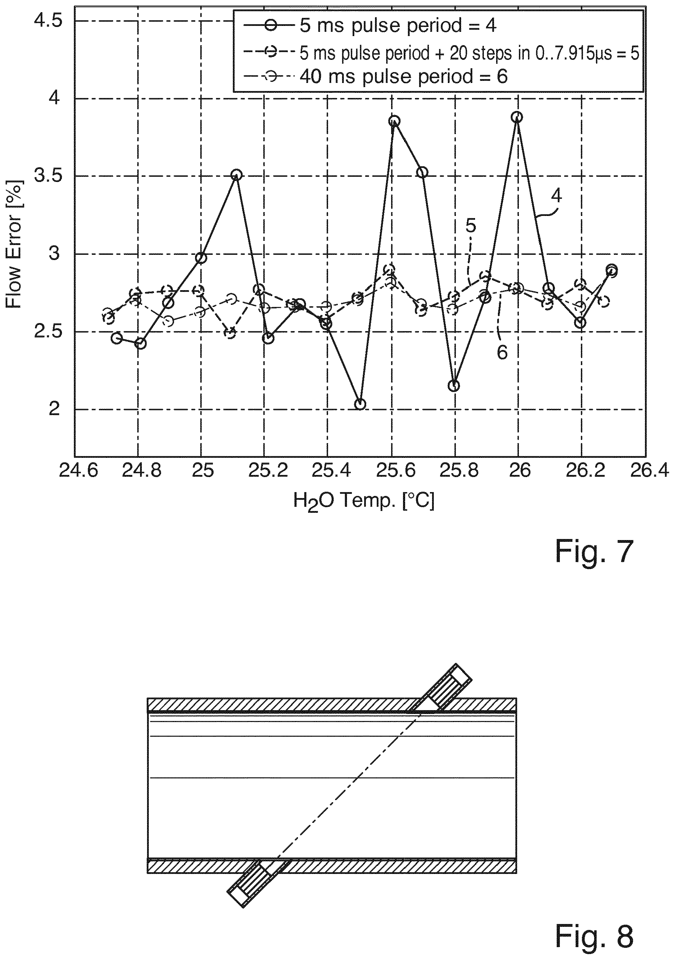

Bei der zuvor beschriebenen Ultraschallwandleranordnung mit zwei Ultraschallwandlern, welche auch als Ultraschallwandlerpaar bezeichnet wird, werden die Ultraschallwandler abwechslungsweise mit einem elektrischen Signal angeregt, wodurch ein Ultraschall-Impuls abgestrahlt wird. Ein typisches Ultraschalldurchflussmessgerät, wie es aus der WO 2009068691 A1 bekannt ist, ist zur Darstellung des Messprinzips in Fig. 8 abgebildet. Das Ultraschallsignal verläuft durch das im Messrohr befindliche Messmedium, überträgt sich allerdings auch über das Messrohr.

Es sind zudem auch Clamp-on Ultraschalldurchflussmessgeräte bekannt. Hier kommen neben der Übertragung durch die Messrohrwandung ggf. auch noch eine Signalübertragung durch zusätzliche Kopplungsmedien, mit denen der Ultraschallwandler mit dem Messrohr eines Ultraschalldurchflussmessgerätes gekoppelt ist (z.B. Ultraschallkoppelpaste) und/oder durch eine Messrohrinnenauskleidung (bei korrosiven Messmedien) hinzu. Der jeweils andere Ultraschallwandler wandelt die ankommende Ultraschall-Welle wieder in ein elektrisches Signal um, das verstärkt und weiterverarbeitet wird.

Die zwei Ultraschallwandler sollen als Ultraschallwandler A und Ultraschallwandler B bezeichnet werden. Je nachdem in welcher Richtung die Ultraschall-Welle gesendet wird, soll das empfangene Signal gemäß folgender Tabelle mit $y_{AB}(t)$ oder $y_{BA}(t)$ bezeichnet werden:

| Ultraschallwandler A | Ultraschallwandler B | Empfangssignal |
|---|---|---|
| Sender | Empfänger | $Y_{AB}(t)$ |
| Empfänger | Sender | $Y_{BA}(t)$ |

Der vom einen Ultraschallwandler erzeugte Ultraschall-Impuls wird aufgrund von Reflexion und Refraktion an Materialgrenzflächen, beispielsweise zwischen dem Ultraschallwandler und dem Messrohr, in unzählige Teilwellen gestreut, sodass beim anderen Ultraschallwandler neben dem Hauptpuls, der dem direkten Pfad (gemäss Brechungsgesetz von Snellius) gefolgt ist, unzählige Streuwellen ankommen. Entsprechend weist das Empfangssignal neben dem zeitlich begrenzten Hauptpuls ein überlagertes rauschähnliches Signal auf, das dem Summensignal aller Streuwellen entspricht. Dieses Summensignal wird geläufig auch Rohrwelle genannt, obwohl einige Anteile nicht ausschließlich in der Rohrwand (oder Aufnehmer) sondern auch durch das Medium propagiert sein können.

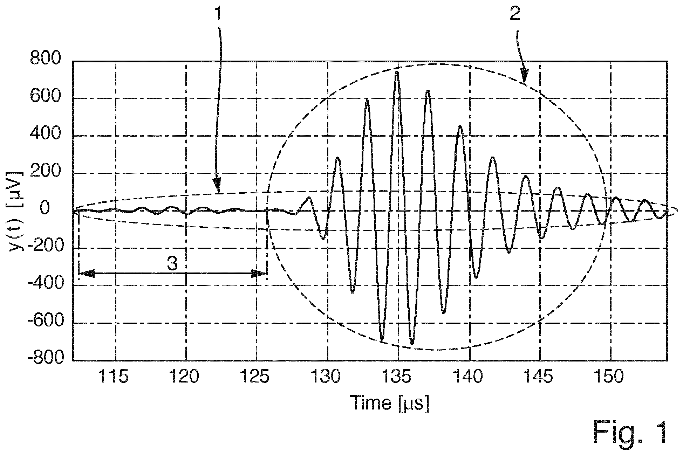

In Fig. 1 ist der zeitliche Verlauf eines Empfangssignals dargestellt. Zunächst erfolgt ein Bereich geringer Amplitude von etwa 10-30 μV. Nach etwa 130 μs beginnt das Signal des Hauptpulses, also des eigentlichen Nutzsignals, welches zur Bewertung der Laufzeitdifferenz benötigt wird. Schließlich erfolgt ein Ausschwingen bei etwa 145 μs, bei welchem einerseits ein Signalanteil durch ein Nachschwingen des Empfangsultraschallwandlers eingeht und andererseits der Anteil der Rohrwelle ist. Zur besseren Kenntlichkeit wurde der Anteil der Rohrwelle 1 und der Anteil des Hauptimpulses 2 grafisch hervorgehoben. In der vorliegenden Erfindung wird der Begriff Störsignal und Rohrwelle synonym verwendet ebenso wie die Begriffe Hauptwelle und Ultraschallnutzsignal synonym zu verstehen sind.

Wie man erkennt, erfolgt die Übertragung eines Anteils der Rohrwelle, welcher u.a. direkt über das Messrohr übertragen wird, wesentlich schneller als die Übertragung des Hauptsignals. Im vorliegenden Fall wurden die Versuchsbedingungen derart gewählt, dass eine vergleichsweise starke Rohrwelle auftritt.

Die Empfangssignale der beiden Ausbreitungsrichtungen können vereinfacht durch die Gleichungen

$$y_{AB}(t) = n_{AB}(t) + x(t - 0.5 \cdot \Delta t)$$
$$y_{BA}(t) = n_{BA}(t) + x(t + 0.5 \cdot \Delta t)$$

(1)

beschrieben werden, wobei $n_{AB}(t)$ bzw. $n_{BA}(t)$ die jeweiligen Rohrwellensignale darstellen. Rauschsignale wie Elektronikrauschen, elektromagnetische Interferenz oder Fremdschall sind nicht berücksichtigt, da diese in der Regel viel schwächer sind als die Rohrwellensignale.

Die Laufzeit des Hauptpulses $x(t)$ wird um $0.5 \cdot \Delta t$ erhöht oder verkleinert, je nachdem ob er mit oder gegen die Strömung durch das Medium propagiert ist.

Die Laufzeitdifferenz $\Delta t$ ist die Messgröße, mit der der Durchfluss bestimmt wird. Da die Rohrwellen den Hauptpuls überlagern, beeinflussen sie auch die Schätzung der Laufzeitdifferenz $\Delta t$. Das bedeutet, dass der Messfehler eines Ultraschall-Durchfluss-messgerätes unter anderem vom Verhältnis der Amplituden des Hauptpulses und den Rohrwellen abhängt. Dieses Verhältnis wird auch mit Signal-zu-Rausch-Verhältnis (Engl. SNR = Signal-to-Noise Ratio) bezeichnet. Der durch die Rohrwelle verursachte Messfehler ist dabei von der Temperatur des Mediums und des Messrohres (Aufnehmers) abhängig.

Untersuchungen haben gezeigt, dass sich der Messfehler mit der Temperatur stärker und schneller ändert, falls sich die beiden Rohrwellen $n_{AB}(t)$ und $n_{BA}(t)$ unterscheiden. Es konnte gezeigt werden, dass der Unterschied durch Schallwellen verursacht wird, welche noch aufgrund der vorhergehenden Einzelmessung im Messrohr und im Medium vorhanden sind. Als Einzelmessung wird dabei der eingangs beschriebene Vorgang bezeichnet, bei dem der eine Ultraschallwandler einen Ultraschall-Impuls absendet und der andere Ultraschallwandler das ankommende Ultraschall-Signal wieder in ein elektrisches Signal wandelt, welches verstärkt und für die weitere Verarbeitung in einem bestimmten Zeitabschnitt aufgezeichnet wird.

Diese langlebigen Störschallwellen bzw. Rohrwellen, in den folgenden Gleichungen mit $n_{AB}(t)$ bzw. $\overline{n}_{BA}(t)$ bezeichnet, sind für die beiden Ausbreitungsrichtungen unterschiedlich. Eine mögliche Erklärung hierfür könnte darin liegen, dass sie nicht ausschließlich im Messrohr sondern abschnittsweise auch durch das fließende Medium propagieren. Die Rohrwellensignale aus Gleichung (1) können gemäss der folgenden Gleichung jeweils als Summe des reinen durchflussunabhängigen Rohrwellensignals $n_P(t)$ und der durchflussabhängigen und daher unterschiedlichen Anteile $\overline{n}_{AB}(t)$ bzw. $\overline{n}_{BA}(t)$ dargestellt werden.

$$n_{AB}(t) = n_P(t) + \overline{n}_{AB}(t)$$
$$n_{BA}(t) = n_P(t) + \overline{n}_{BA}(t)$$

(2)

Der Anteil $n_p(t)$, also Rohrwellen mit $\overline{n}_{AB}(t) = \overline{n}_{BA}(t) = 0$, sollen als symmetrische Rohrwellen bezeichnet werden, weil gemäß Gleichung (2) folgendes gilt:

$$n_{AB}(t) = n_{BA}(t) = n_P(t)$$

(3)

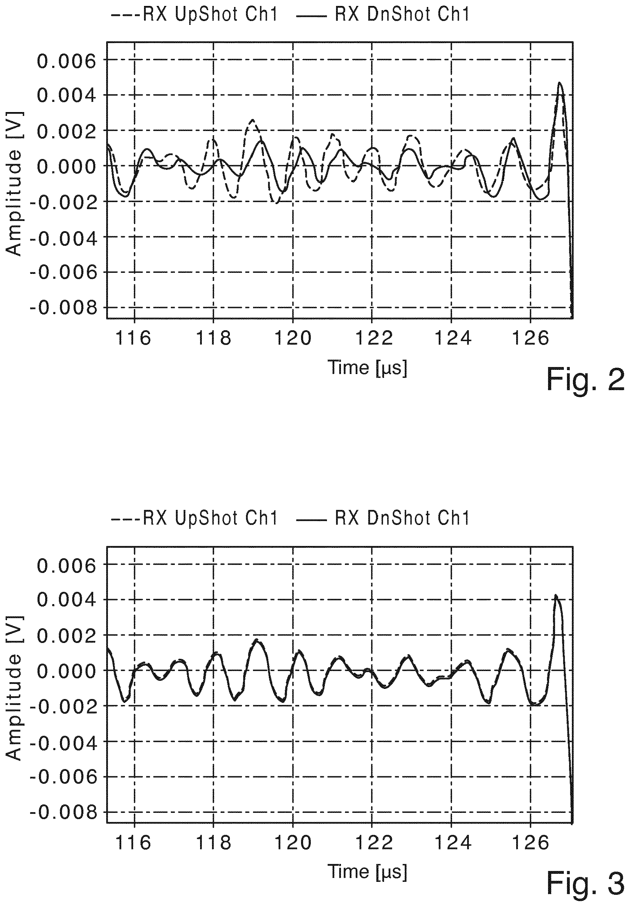

Die symmetrischen Rohrwellen sind in Fig. 3 dargestellt, in welcher sich die zwei Wellen $n_{AB}(t)$ und $n_{BA}(t)$ vollständig überlagern. Die symmetrischen Rohrwellen können beispielsweise Echos von vorhergehenden Schallpulsen sein, welche allerdings ausschließlich außerhalb des Messmediums, insbesondere ausschließlich im Messrohr, propagieren. Sie sind relativ häufig und gehen als Grundrauschen in die Messung ein. Sie verursachen aufgrund der Tatsache, dass die Temperaturabhängigkeit der Schallgeschwindigkeit des Messrohres, das beispielsweise aus Stahl besteht, viel kleiner ist als diejenige des Messmediums, beispielsweise Wasser, , nur geringe Messwertschwankungen innerhalb eines größeren Temperaturbereichs von mehreren Grad Kelvin.

Für asymmetrische Rohrwellen gilt $n_{AB}(t) \neq n_{BA}(t)$. Diese Situation ist in Fig. 2 dargestellt.

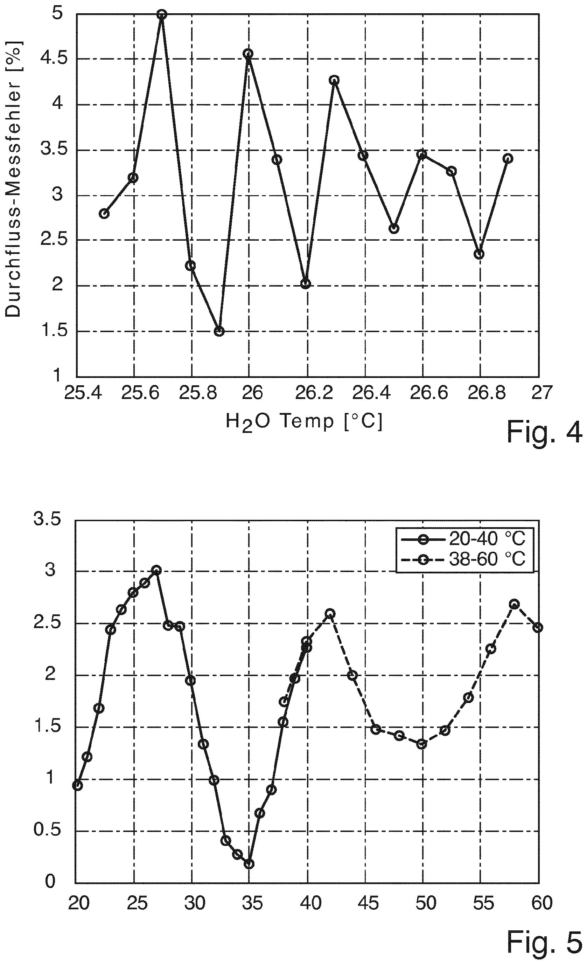

Die oben erwähnte Abhängigkeit des Messfehlers kommt dadurch zustande, dass die Rohrwellenanteile $\bar{n}_{AB}(t)$ und $\bar{n}_{AB}(t)$ teilweise durch das Medium propagiert sind, dessen Schallgeschwindigkeit sich im Vergleich mit der Schallgeschwindigkeit des metallenen Messrohres mit der Temperatur in der Regel viel stärker ändert. Fig. 4 zeigt eine Messung mit starken Messfehlerschwankungen innerhalb kleinster Temperaturänderungen aufgrund asymmetrischer Rohrwellen. Symmetrische Rohrwellen verursachen Messfehler, die mit der Temperatur viel langsamer ändern, wie die Messungen in Fig. 5 zeigen. Man beachte die unterschiedlichen Temperaturskalen der beiden Kurven. Das Phänomen der Temperaturveränderlichkeit der asymmetrischen Rohrwellen wurde bislang noch nicht erkannt. Es verhält sich sogar so, dass diese asymmetrischen Rohrwellen bislang noch nicht wahrgenommen und als solche identifiziert wurden. Sie treten vergleichsweise selten auf, bilden allerdings einen erheblichen Störsignalanteil. Diese asymmetrischen Rohrwellen treten auch bei Inline-Ultraschalldurchflussgeräten auf, bei denen die Ultraschallwandler mediumsberührend ausgeführt sind und das Ultraschallsignal durch Mehrfachreflexion an der Rohrinnenwand von einem Ultraschallwandler zum anderen läuft. Hier treten auch die besagten asymmetrischen Rohrwellen auf, welche in diesem Fall nur vom aktuellen und nicht vom vorherigen Sendesignal stammen. Derartige Ultraschallstörsignale lassen sich nicht durch Impulsfolgenmodulation kompensieren.

Ausgeprägte asymmetrische Rohrwellen wurden insbesondere bei Verwendung niederfrequenter Clamp-on Ultraschallwandler (z.B. 0.5 MHz Mittenfrequenz) in Zweitraversenmontage auf Metallrohren beobachtet. Die Bestimmung des SNR für Diagnosezwecke ohne Unterscheidung symmetrischer/asymmetrischer Rohrwellen ist in unseren Messgeräten schon implementiert und wird als Stand der Technik betrachtet.

Der wesentliche Bestandteil der vorliegenden Erfindung besteht in einer Bestimmung des Anteils der asymmetrischen Rohrwellen. Zudem erfolgt eine Bestimmung bezüglich des Einflusses auf den Messwert.

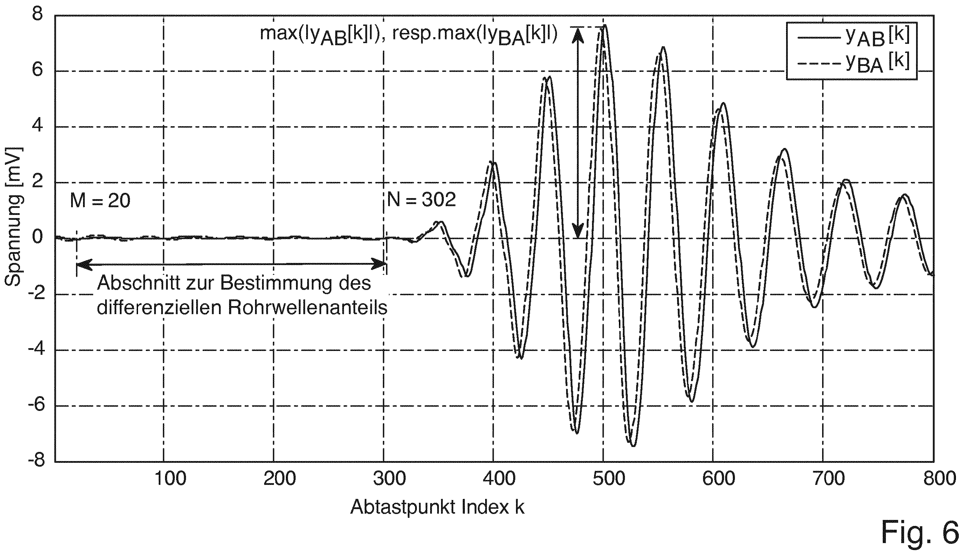

Der Anteil der asymmetrischen Rohrwellen kann durch Vergleich der Empfangssignale $y_{AB}(t)$ und $y_{BA}(t)$ in einem Zeitabschnitt 3 mit zu bestimmenden Grenzen M und N vor den Hauptpulsen abgeschätzt werden. Dies ist im Detail in Fig. 6 dargestellt. In diesem Bereich sind die Rohrwellen $n_{AB}(t)$ und $n_{BA}(t)$ nicht durch das Hauptsignal überlagert. Die Grenzen, welche im vorliegenden Beispiel zwischen M=20 und N=302 liegen, können je nach Nennweite des Messrohres völlig unterschiedlich sein - können allerdings im Rahmen einer Messung bestimmt werden.

Als Vergleichsoperation zwischen den in Fig. 6 dargestellten Rohrwellen, wovon eine mit und eine gegen die Strömung durch das Medium propagiert, kommt der mittlere quadratische Fehler in Betracht.

Dieser wird gemäß folgender Gleichung ins Verhältnis zum Produkt der maximalen Amplituden der Hauptpulse gesetzt.

Man beachte, dass in den folgenden Gleichungen anstatt der Zeitvariable t der für die Beschreibung zeitdiskreter (abgetasteter) Signale geeignete Abtastindex k verwendet wird.

$$SDNR = 10 \cdot \log 10 \left( \frac{2 \cdot \max(|y_{AB}[k]|) \cdot \max(|y_{BA}[k]|)}{\frac{1}{N-M+1} \cdot \sum_{k=M}^{N} (y_{AB}[k] - y_{BA}[k])^2} \right) \qquad (4)$$

Die Größe SDNR ist analog zum SNR ein Verhältnis von Nutzsignalleistung - in diesem Fall dem Produkt der maximalen Amplituden der Hauptpulse - zu Rauschleistung (Störsignalleistung), die in diesem Fall der mittleren quadrierten Differenz der Rohrwellensignale entspricht. Diese Differenz wird im Abtastintervall mit den Grenzen M und N gemäß Gleichung (4) berechnet. Die SDNR-Größe kann als Gütekriterium im Sinne der vorliegenden Anmeldung verwendet werden.

So ist beispielsweise ein SDNR-Wert von kleiner als 25 dB als Gütekriterium "verfälscht" für einen durch Störsignale verfälschten Einzelmesswert einzustufen.

Ein SDNR-Wert von größer als 50 dB ist hingegen als Gütekriterium "verlässlich" für einen durch Störsignale lediglich gering verfälschten Einzelmesswert einzustufen.

SDNR ist als Angabe bezüglich des Messfehlers zu verstehen und ist die Abkürzung des hiermit neu definierten Begriffs "Signal-to-Differential-Noise Ratio". Die schnelle, temperaturbedingte Messfehlerschwankung gemäss Abbildung 4 nimmt mit steigendem SDNR ab.

Die Differenz der Rohrwellensignale kann wie folgt geschrieben werden.

$$\Delta n[k] = n_{AB}[k] - n_{BA}[k] = \left(n_P[k] + \overline{n}_{AB}[k]\right) - \left(n_P[k] + \overline{n}_{BA}[k]\right) = \overline{n}_{AB}[k] - \overline{n}_{BA}[k],$$

wobei der symmetrische Rohrwellenanteil $n_P(t)$ wegfällt.

Abschließend sei nochmals angemerkt, dass in diesen Ausführungen stochastische Rauschsignale, wie Elektronikrauschen, elektromagnetische Interferenz oder Fremdschall, nicht berücksichtig wurden, da sie in der Regel viel schwächer sind als die Rohrwellensignale und zudem auf den Messwert keinen systematischen (z.B. von der Temperatur abhängigen) Einfluss haben, der nicht durch genügend lange Mittelung eliminiert werden kann.

Dieser SDNR Wert kann nach seiner Berechnung durch die Anzeigeeinheit ausgegeben werden und ermöglicht dem Nutzer eine sinnvolle Einschätzung bezüglich der Zuverlässigkeit seines Hauptsignals

Die Bestimmung des Umfangs der temperatursensiblen Störsignale, also der asymmetrischen Rohrwellen, als Messfehlergröße ermöglicht dem Endverbraucher eine Validierung der Zuverlässigkeit seiner ermittelten Durchflusswerte. Diese Validierung kann allerdings durch eine Auswerteeinheit selbst vorgenommen und beispielsweise durch eine Ausgabeeinheit entweder akustisch oder visuell angezeigt werden.

Da die asymmetrischen Rohrwellen besonders temperaturempfindlich sind, bilden diese asymmetrischen Rohrwellen eine Fehlerquelle, deren Umfang für eine bessere Validierung der Messergebnisse in kurzen Zeiträumen, vorzugsweise alle 1-20 sec., bestimmt werden muss.

Es kann alternativ oder zusätzlich eine Verifizierung durch die Auswerteeinheit des Durchflussmessgerätes selbst erfolgen, bezüglich der Zuverlässigkeit der jeweiligen Messsignalfolge, wobei nur diejenigen Messsignalfolgen in die Ermittlung des Durchflusswertes eingehen, bei denen der Umfang der asymmetrischen Rohrwellen einen bestimmten Sollwert nicht überschreiten.

Zusätzlich zur Verifizierung des Umfangs der temperatursensiblen asymmetrischen Störsignale kann der Einfluss dieser Störsignale auch teilweise oder vollständig durch eine Modulation der Impulsfolgeperiode reduziert werden.

Die Impulsfolgefrequenz (engl.: Pulse Repetition Frequency PRF = Pulswiederholfrequenz) ist die Anzahl der gesendeten Impulse pro Sekunde. Das Ultraschalldurchflussmessgerät sendet einen Impuls mit einer festgesetzten Sendeimpulsdauer und wartet zwischen den Sendeimpulsen auf die Empfangssignale. Die Zeit vom Beginn des einen Sendeimpulses bis zum Beginn des nächsten Sendeimpulses wird Impulsfolgeperiode (engl.: Pulse Repetition Time PRT) genannt und ist der Kehrwert der Impulsfolgefrequenz:
Die Zeit zwischen den Sendeimpulsen ist allgemein die Empfangszeit. Diese ist immer kleiner als die Differenz zwischen der Impulsfolgeperiode und der Sendezeit und wird manchmal zusätzlich begrenzt durch eine so genannte Totzeit.

Die besagte Impulsfolgeperiode kann schrittweise moduliert werden um asymmetrische Rohrwellen, welche aus vorangegangenen Sendepulsen gebildet werden, zu kompensieren

Die optimalen Werte für die Schrittweite und die Anzahl der Schritte hängen von der mittleren Periode $T_C$ ($=1/F_C$) der Störschallwellen ab. $F_C$ ist die Mittenfrequenz der Störschallwellen. Die Impulsfolgeperiode wird in Schritten der Länge $T_C/20$ bis $T_C/5$ im Bereich von $T_P$ bis $T_P+N*T_C$ variiert, wobei $T_P$ der minimalen Impulsfolgeperiode entspricht und N zwischen 4 und 10 liegen sollte.

Durch Modulation der Impulsfolgeperiode geht die Kohärenz zwischen der Hauptwelle und den genannten, sehr langsam abklingenden Störschallwellen im Mittel verloren. Unter Modulation der Impulsfolgeperiode versteht man die schrittweise Änderung der Impulsfolgeperiode in einem bestimmten Bereich.. Messungen mit einer Impulsfolgeperiodenmodulation von 20 Schritten und einer Schrittweite $T_{SW}$ von $1/(5 \cdot F_C)$ lieferten gute Resultate (siehe Fig. 7). Die Impulsfolgeperiode kann nach jeder oder nach mehreren Einzelmessungen verändert werden. Dabei ist es wichtig, dass die Impulsfolgeperiodenmodulation bezüglich der Senderichtung symmetrisch erfolgt.

Modulationsbreite ist die minimale Differenz der maximalen Impulsfolgeperiode und der minimalen Impulsfolgeperiode. Sie beträgt zwischen 4 und 10mal der mittleren Periode der Störschallwellen. Schrittweite der Variation der Impilsfolgeperiode ist kleiner als die Periode der Störschallwellen, vorzugsweise 1/5 bis 1/20.

Der Bereich der der mittleren Periode der Störschallwellen beträgt zwischen 0,1 $\mu$s und 10 $\mu$s.

In Fig. 7 sind Störsignale unter analogen Messbedingungen aufgenommen. Hierbei wurden 0,5 MHz Clampon Ultraschallwandler mit einem rostfreiem Messrohr (88,9*5,5 mm) genutzt. Das Messmedium war Wasser mit einem Durchfluss von 12 l/s. Die Messkurve 4 zeigt Messfehlerschwankungen des Ultraschallstörsignals hervorgerufen durch asymmetrische Rohrwellen.
Wie man anhand der Messkurve 5 erkennt erfolgt Reduktion der temperaturbedingten Messfehlerschwankungen mittels Impulsfolgeperiodenmodulation

Zudem wurde als Vergleich in der Messkurve 6 eine Messung mit einer konstanten und sehr langen Impulsfolgeperiode von 40 ms aufgeführt. Durch Verlängerung der Impulsfolgeperiode wird erreicht, dass Störsignale, welche von vorherigen Sendepulsen stammen, soweit abklingen, dass sie das aktuelle Empfangssignal kaum noch stören. Jedoch beeinflusst die Impulsfolgeperiode zentrale Parameter wie die Messrate, das Messrauschen und die Ansprechzeit des Durchflussmessgerätes. In dieser Hinsicht ist eine möglichst kurze Impulsfolgeperiode anzustreben, ohne dass die Interferenzen der vorherigen Sendepulse den Messwert verfälschen. Dies kann, wie in der Messkurve 5 dargestellt, durch die Impulsfolgeperiodenmodulation erreicht werden.

Es wird daher nicht versucht, den Störwellen auszuweichen, sondern deren Einfluss auf den Messwert durch Aufhebung der Kohärenz zwischen Haupt- und Störwellen zu minimieren.

## Bezugzeichenliste

1    Rohrwelle
2    Hauptwelle
3    Zeitabschnitt
4    Messkurve - unkompensiert
5    Messkurve - kompensiert
6    Messkurve- kompensiert

## Patentansprüche

1.  Verfahren zur Verifizierung der Zuverlässigkeit von ermittelten Messdaten einer Ultraschall-Durchflussmessung nach der Laufzeitdifferenz-Methode, wobei durch ein Ultraschalldurchflussmessgerät mit zumindest zwei Ultraschallwandlern Ultraschallsignale schräg in oder entgegen einer Strömungsrichtung eines Messmediums ausgesandt und empfangen werden,
    wobei innerhalb eines ersten Zeitfensters vor dem Empfang eines ersten Ultraschallnutzsignals, welches im Wesentlichen durch das Messmedium zwischen den Wandlern propagiert, ein erstes Ultraschallstörsignal aufgenommen wird, wobei das erste Ultraschallstörsignal zumindest teilweise im Messmedium zwischen den Ultraschallwandlern propagiert,
    wobei innerhalb eines zweiten Zeitfensters vor dem Empfang eines zweiten Ultraschallnutzsignals, welches im Wesentlichen durch das Messmedium zwischen den Wandlern propagiert, ein zweites Ultraschallstörsignal aufgenommen wird, wobei das zweite Ultraschallstörsignal zumindest teilweise im Messmedium zwischen den Ultraschallwandlern propagiert,
    wobei das erste und das zweite Ultraschallnutzsignal zwei Ultraschallsignalen zugeordnet sind, die in entgegengesetzten Richtungen durch das Medium gesandt werden, und wobei ein Gütekriterium zur Bewertung der Messunsicherheit eines Messwertes, welcher proportional zu der aus dem ersten und zweiten Ultraschallnutzsignal ermittelten Laufzeitdifferenz ist, ermittelt wird,
    **dadurch gekennzeichnet, dass**,
    die Ermittlung des Gütekriteriums eine Differenzbildung zwischen dem ersten und dem zweiten Störsignal umfasst.

2.  Verfahren nach Anspruch 1, **dadurch gekennzeichnet, dass** ein Sollwert für ein Gütekriterium vorgegeben wird und sofern der Sollwert unterschritten wird, die Messunsicherheit als zu hoch evaluiert wird.

3.  Verfahren nach Anspruch 1 oder 2, **dadurch gekennzeichnet, dass** das Gütekriterium durch eine Vergleichsoperation ermittelt wird, welche die Ermittlung der mittleren quadratischen Differenz aus dem ersten und dem zweiten Ultraschallstörsignals umfasst.

4.  Verfahren nach einem der vorhergehenden Ansprüche, **dadurch gekennzeichnet, dass** das Gütekriterium durch eine Vergleichsoperation ermittelt wird, welche die Quotientenbildung aus dem Produkt der maximalen Amplituden des Ultraschallnutzsignals zur mittleren quadratischen Differenz des ersten und des zweiten Ultraschallstörsignals umfasst.

5.  Verfahren nach einem der vorhergehenden Ansprüche, **dadurch gekennzeichnet, dass** das erste und das zweite Zeitfenster gleich groß sind.

6.  Ultraschalldurchflussmessgerät mit zumindest zwei Ultraschallwandlern und einer Auswertevorrichtung, welche ausgebildet ist zur Verifizierung der Zuverlässigkeit von ermittelten Messdaten einer Ultraschall-Durchflussmessung nach der Laufzeitdifferenz-Methode nach einem Verfahren gemäß einem der Ansprüche 1-5.

7. Ultraschalldurchflussmessgerät nach Anspruch 6, **dadurch gekennzeichnet dass** das Ultraschalldurchflussmessgerät eine Anzeigeeinheit aufweist, zur Ausgabe einer aktuell ermittelten Messunsicherheit.

**Claims**

1. Procedure to verify the reliability of determined measured data of an ultrasonic flow measurement according to the transit time difference method,
   wherein ultrasonic signals are transmitted and received - in a manner at an angle to or opposite the flow direction of a measured medium - by an ultrasonic flowmeter with at least two ultrasonic converters,
   wherein a first ultrasonic interference signal is recorded within a first time window, before the reception of a first useful ultrasonic signal, which essentially propagates through the measured medium between the converters, wherein the first ultrasonic interference signal propagates at least partially in the measured medium between the ultrasonic converters,
   wherein a second ultrasonic interference signal is recorded within a second time window, before the reception of a second useful ultrasonic signal, which essentially propagates through the measured medium between the converters, wherein the second ultrasonic interference signal propagates at least partially in the measured medium between the ultrasonic converters,
   wherein the first and the second useful ultrasonic signal are assigned to two ultrasonic signals, which are emitted in opposite directions through the medium, and wherein a quality criterion is determined to assess the measuring uncertainty of a measured value which is proportional to the transit time difference determined from the first and the second useful ultrasonic signal,
   **characterized in that**
   the determination of the quality criterion comprises the formation of a difference between the first and the second interference signal.

2. Procedure as claimed in Claim 1, **characterized in that** a target value is defined for a quality criterion and the measuring uncertainty is assessed as being too high if the target value is undershot.

3. Procedure as claimed in Claim 1 or 2, **characterized in that** the quality criterion is determined by a comparison operation, which comprises the determination of the average quadratic difference from the first and the second ultrasonic interference signal.

4. Procedure as claimed in one of the previous claims, **characterized in that** the quality criterion is determined by a comparison operation, which comprises the quotient formation formed from the product of the maximum amplitude of the useful ultrasonic signal and the average quadratic difference of the first and second ultrasonic interference signal.

5. Procedure as claimed in one of the previous claims, **characterized in that** the first time window and the second time window are of the same size.

6. Ultrasonic flowmeter with at least two ultrasonic converters and an evaluation unit which is designed to verify the reliability of the determined measured data of an ultrasonic flowmeter according to the transit time difference method in accordance with a procedure as claimed in one of the Claims 1 to 5.

7. Ultrasonic flowmeter as claimed in Claim 6, **characterized in that** the ultrasonic flowmeter has a display unit for displaying a measuring uncertainty that is currently determined.

**Revendications**

1. Procédé destiné à la vérification de la fiabilité de données de mesure déterminées au moyen d'une mesure de débit à ultrasons d'après la méthode de la différence des temps de propagation,
   procédé pour lequel des signaux ultrasonores sont émis et reçus - de façon transversalement ou dans le sens contraire au sens d'écoulement d'un produit mesuré - par un débitmètre à ultrasons avec au moins deux convertisseurs à ultrasons,
   un premier signal ultrasonore parasite étant enregistré à l'intérieur d'une première fenêtre de temps, avant la réception d'un premier signal ultrasonore utile, lequel se propage pour l'essentiel à travers le produit mesuré, entre les convertisseurs, le premier signal ultrasonore parasite se propageant au moins partiellement dans le produit mesuré, entre les deux convertisseurs à ultrasons,

un deuxième signal ultrasonore parasite étant enregistré à l'intérieur d'une deuxième fenêtre de temps, avant la réception d'un deuxième signal ultrasonore utile, lequel se propage pour l'essentiel à travers le produit mesuré, entre les convertisseurs, le deuxième signal ultrasonore parasite se propageant au moins partiellement dans le produit mesuré, entre les deux convertisseurs à ultrasons,

le premier et le deuxième signal ultrasonore utile étant attribués à deux signaux ultrasonores, qui sont émis dans des directions opposées à travers le produit, et un critère de qualité utilisé pour l'évaluation de l'incertitude de mesure d'une valeur mesurée, laquelle est proportionnelle à la différence des temps de propagation déterminée à partir du premier et du deuxième signal ultrasonore utile, étant déterminé,

**caractérisé**

**en ce que** la détermination du critère de qualité comprend la formation d'une différence entre le premier et le deuxième signal parasite.

2. Procédé selon la revendication 1, **caractérisé en ce qu'**une valeur de consigne est spécifiée pour un critère de qualité et, dans la mesure où la valeur de consigne est dépassée par défaut, l'incertitude de mesure est évaluée comme étant élevée.

3. Procédé selon la revendication 1 ou 2, **caractérisé en ce que** le critère de qualité est déterminé par une opération de comparaison, laquelle opération comprend la détermination de la différence quadratique moyenne à partir du premier et du deuxième signal ultrasonore parasite.

4. Procédé selon l'une des revendications précédentes, **caractérisé en ce que** le critère de qualité est déterminé par une opération de comparaison, laquelle opération comprend le quotient formé à partir du produit de l'amplitude maximale du signal ultrasonore utile et de la différence quadratique moyenne du premier et du deuxième signal ultrasonore parasite.

5. Procédé selon l'une des revendications précédentes, **caractérisé en ce que** la première fenêtre de temps et la deuxième fenêtre de temps sont de taille égale.

6. Débitmètre à ultrasons avec au moins deux convertisseurs à ultrasons et un dispositif d'exploitation, lequel est destiné à la vérification de la fiabilité des données de mesure déterminées au moyen d'un débitmètre à ultrasons d'après la méthode de la différence des temps de propagation, selon un procédé conformément à l'une des revendications 1 à 5.

7. Débitmètre à ultrasons selon la revendication 6, **caractérisé en ce que** le débitmètre à ultrasons comprend une unité d'affichage destinée à afficher une incertitude de mesure actuellement déterminée.

Fig. 1

---RX UpShot Ch1 ——— RX DnShot Ch1

Fig. 2

---RX UpShot Ch1 ——— RX DnShot Ch1

Fig. 3

Fig. 4

Fig. 5

Fig. 6

EP 2 936 080 B1

Fig. 7

Fig. 8

**IN DER BESCHREIBUNG AUFGEFÜHRTE DOKUMENTE**

**In der Beschreibung aufgeführte Patentdokumente**

- US 2005055171 A1
- WO 2009068691 A1